# FASCICULE DE BREVET EUROPEEN

(11) **EP 3 060 895 B1**
(45) Date de publication et mention de la délivrance du brevet: **11.12.2019**
(21) Numéro de dépôt: 14789280.6
(22) Date de dépôt: 24.10.2014
(51) Int. Cl.: G01L 19/14, G01L 19/04

(54) **CAPTEUR DE PRESSION COMPRENANT UNE STRUCTURE DE CONTRÔLE D'UNE COUCHE D'ADHÉSIF RÉSISTANTE AUX VARIATIONS DE TEMPÉRATURES**
DRUCKSENSOR MIT EINER STRUKTUR ZUM KONTROLLIEREN EINER GEGEN TEMPERATURÄNDERUNGEN BESTÄNDIGEN KLEBESCHICHT
PRESSURE SENSOR INCLUDING A STRUCTURE FOR CONTROLLING AN ADHESIVE LAYER RESISTANT TO TEMPERATURE VARIATIONS

(30) Priorité: 25.10.2013 FR 1360436
(43) Date de publication de la demande: 31.08.2016
(73) Titulaire: Auxitrol SA, 18000 Bourges (FR)
(72) Inventeur: BRIDA, Sebastiano, 11410 Salles sur L'Hers (FR); SEYER, David, 18220 Rians (FR)
(74) Mandataire: Regimbeau
(86) Numéro de dépôt international: PCT/EP2014/072913
(87) Numéro de publication internationale: WO 2015/059301

(56) Documents cités:
- EP-A1- 0 619 477
- DE-A1- 19 848 256
- DE-A1-102011 078 055
- JP-A- H06 186 104
- JP-A- 2003 083 828
- US-A- 4 481 497
- US-A- 5 852 320

## Description

### DOMAINE TECHNIQUE GENERAL

L'invention concerne un capteur de pression comprenant un substrat support et une membrane déformable disposée sur le substrat support.

### ETAT DE LA TECHNIQUE

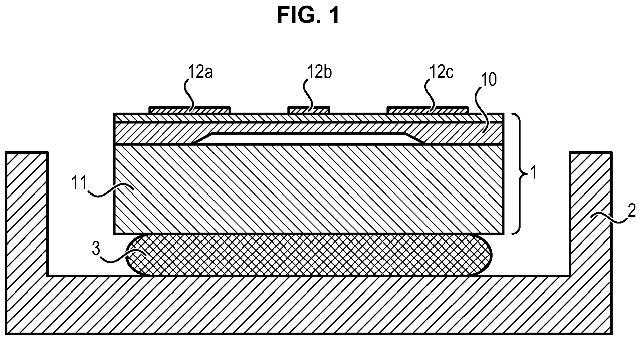

En relation avec la **figure 1****,** un capteur de pression comprend un élément sensible 1 comprenant une membrane 10 déformable dont la déformation est représentative d'une pression appliquée sur ce dernier. La membrane est disposée sur un substrat support 11 typiquement en matériau à base de verre. La membrane 10 supporte en outres des éléments de mesure de pression 12a, 12b, 12c.

L'élément sensible 1 est assemblé à un boitier 2 métallique. Le substrat support est connecté au boitier par l'intermédiaire d'une couche d'adhésif 3 par exemple une base de silicone présentant des propriétés de souplesse lorsque soumis à des variations de température (en anglais, « *RTV silicone glue* »).

L'utilisation de cette couche d'adhésif 3 participe à la précision du capteur.

En effet, la précision du capteur est sensible aux cycles thermiques et une variation de température induit une contrainte entre l'élément sensible et le boitier (contrainte due à une différence entre les coefficients de dilatation thermique des deux matériaux) ; cette contrainte est transmise par le substrat support 11 et crée un stress mécanique et donc une déformation mécanique de la membrane 10 déformable, déformation qui est transmise au niveau des éléments de mesure de pression, et qui génère un décalage (en anglais, « *offset* ») résiduel du signal issu de l'élément sensible, décalage résiduel non nul et proportionnel aux variations de température appliquées et aux stress induit par les contraintes thermo-mécaniques.

Cette contrainte peut être toutefois plus ou moins absorbée par la couche d'adhésif 3.

Toutefois, si l'épaisseur de la couche d'adhésif est trop fine, la contrainte est partiellement transférée à l'élément sensible et crée une déformation sur cet élément sensible, déformation qui génère, au niveau des éléments de mesure de pression, un offset résiduel au niveau du signal mesuré, offset résiduel non nul et proportionnel aux variations de température appliquées et aux stress induit par les contraintes thermo-mécaniques; cet offset résiduel indépendant de la pression créé une erreur de mesure appelée hystérésis de température.

Le document DE 10 2011 078 055 A1 enseigne un capteur de pression qui comprend une membrane, un substrat support, une structure intermédiaire, et un boîtier avec un socle. En outre, selon le document une couche d'adhésif comprenant un matériau de base et des microbilles est disposée entre la structure intermédiaire et le support.

Document JP 2003 083828 enseigne un capteur de pression à semi-conducteurs qui comprend une membrane, un substrat support avec des trous. Les trous sont remplis avec un adhésif sur lequel le capteur de pression est fixé.

Document JP H06 186104 enseigne un capteur de pression à semi-conducteurs qui comprend un boîtier pour accueillir une résine dans laquelle un substrat support vitreux lui-même supportant une membrane.

Document EP 0 619 477 A1 enseigne un capteur de pression à jauge de contrainte basé sur des éléments piézorésistifs qui comprend une membrane, une pièce de découplage et un substrat support. La membrane est connectée et fixée avec le substrat support par la pièce de découplage et des couches adhésives.

Il existe par conséquent un besoin de pouvoir contrôler l'épaisseur de la couche d'adhésif utilisée dans l'assemblage d'un capteur de pression du type précité.

### PRESENTATION DE L'INVENTION

L'invention propose de pallier cet inconvénient.

A cet effet, l'invention propose un capteur de pression comprenant :
un élément sensible comprenant un substrat support, ledit substrat support comprenant une surface supérieure et une surface inférieure, l'élément sensible comprenant en outre une membrane déformable connectée à la surface supérieure du substrat support ;
un boitier dans lequel l'élément sensible est disposé, le boitier comprenant un socle ;
une structure intermédiaire disposée entre le socle du boitier et le substrat support, ladite structure intermédiaire comprenant une base, la base comprenant une surface supérieure et une surface inférieure connectée au socle du boitier, ladite structure intermédiaire comprenant en outre une pluralité de cales agencées pour maintenir à une distance prédéterminée le substrat support de la surface supérieure de la base ;
une couche d'adhésif s'étendant sur la surface supérieure de la base et entre les cales, ladite couche d'adhésif étant d'épaisseur contrôlée par la distance prédéterminée à laquelle le substrat support est maintenu de la surface supérieure de la base.

L'invention est avantageusement complétée par les caractéristiques suivantes, prises seules ou en une quelconque de leur combinaison techniquement possible :
- la structure intermédiaire est en outre configurée pour définir un espace entre la surface inférieure du substrat support et la surface supérieure de la structure intermédiaire ;
- la structure intermédiaire est rectangulaire et comprend quatre cales, chaque cale étant disposée dans un coin de ladite structure intermédiaire, les cales maintenant à la distance prédéterminée le substrat support de la surface supérieure de la structure intermédiaire ;
- la structure intermédiaire est déformable ;
- la structure intermédiaire comprend une partie fine et une partie épaisse, ladite partie fine supportant la couche d'adhésif ;
- la structure intermédiaire comprend en outre une butée disposée au centre de la partie fine de ladite structure intermédiaire ;
- la structure intermédiaire est un substrat en matériau choisi parmi le groupe suivant : silicium, verre, quartz, pyrex™, alumine, saphir, SiC ;
- la couche d'adhésif est à base de silicone, matériau présentant des propriétés de souplesse lorsque soumis à des variations de température ;
- la surface inférieure de la structure intermédiaire est connectée au socle du boitier par l'intermédiaire d'une couche de liaison ;
- la couche de liaison est par exemple une couche en résine époxy ;
- la couche d'adhésif a une épaisseur égale à la distance prédéterminée à laquelle est maintenu l'élément sensible de la surface supérieure de la structure intermédiaire ;
- il comprend un évidement central de sorte que ledit capteur de pression est configuré pour mesurer une pression de manière différentielle.

L'invention concerne également un procédé de fabrication d'un capteur de pression selon l'une des revendications précédentes, comprenant les étapes suivantes :
fournir un élément sensible comprenant un substrat support ledit substrat support comprenant une surface supérieure et une surface inférieure, l'élément sensible comprenant en outre une membrane déformable connectée à la surface supérieure du substrat support ;
fournir un boitier comprenant un socle ;
fournir une structure intermédiaire comprenant une base, la base comprenant une surface supérieure, ladite structure intermédiaire étant configurée pour maintenir à une distance prédéterminée le substrat support de la surface supérieure de la structure intermédiaire ;
déposer une couche d'adhésif sur la surface supérieure de la structure intermédiaire, ladite couche d'adhésif étant d'épaisseur contrôlée par la distance prédéterminée à laquelle le substrat support est maintenu de la surface supérieure de la structure intermédiaire ;
connecter la structure intermédiaire au substrat support ;
connecter au socle du boitier la structure intermédiaire.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels outre la figure 1 déjà discutée :
- la figure 2 illustre un capteur de pression selon un premier mode de réalisation de l'invention ;
- la figure 3 illustre un capteur de pression selon un second mode de réalisation de l'invention ;
- la figure 4 illustre un capteur de pression selon un troisième mode de réalisation de l'invention ;
- la figure 5 illustre un capteur de pression selon un quatrième mode de réalisation ;
- la figure 6 illustre une vue en perspective d'une structure intermédiaire du capteur de pression selon le premier mode de réalisation de l'invention ;
- les figures 6a et 6b illustrent respectivement des vues en perspective de dessus et de dessous d'une structure intermédiaire du capteur de pression selon le second mode de réalisation de l'invention ;
- la figure 7 illustre schématiquement des étapes d'un procédé de fabrication d'un capteur de pression selon l'invention ;
- la figure 8 illustre de façon comparative le capteur de pression selon le troisième mode de réalisation de l'invention ainsi qu'un capteur de pression selon un quatrième mode de réalisation, respectivement dans deux états déformés.

Sur l'ensemble des figures, les éléments similaires portent des références identiques.

### DESCRIPTION DETAILLEE DE L'INVENTION

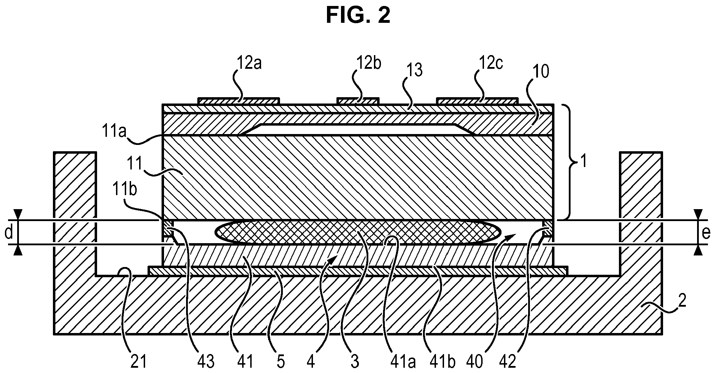

On a illustré sur la **figure 2** un capteur de pression selon un premier mode de réalisation de l'invention.

Un tel capteur comprend :
- un élément sensible 1 ;
- un boitier 2 dans lequel l'élément sensible est disposé, le boitier comprenant un socle 21 ;
- une couche d'adhésif 3 comprenant une épaisseur e ; et
- un structure intermédiaire 4.

L'élément sensible comprend un substrat support 11 qui comprend une surface supérieure 11a et une surface inférieure 11b, l'élément sensible 1 comprenant en outre une membrane 10 déformable connectée à la surface supérieure 11a du substrat support 11.

Le substrat support 11 peut être en matériau à base de verre, de Silicium, quartz, pyrex™, saphir, alumine, SiC.

La membrane 10 déformable est connectée au substrat support 11 par scellement anodique ou au moyen d'une liaison moléculaire ou atomique avec ou sans couche intermédiaire, ou par frittage ou par brasage.

La membrane 10 déformable est typiquement formée à partir d'un substrat par exemple constitué de Silicium monocristallin comme le SOI (en anglais, « *Silicon On Insulator* ») et le PSOI (en anglais, « *Poly Silicon On Insulator* »), de saphir comme le SOS (en anglais, « *Silicon On Saphir »),* ou d'un autre matériau comme le SiCOI (en anglais, *« SiC on Insulator* ») ou le SiC.

Une couche électriquement isolante 13 est en outre disposée au-dessus de la membrane déformable 10. Une telle couche est par exemple en SiO₂ dans le cas d'une membrane en SOI ou PSOI. Sur cette couche isolante 13 différents matériaux tels que des nitrures, des oxydes, des couches métalliques, du Silicium mono et polycristallin sont disposés de manière à former des éléments de mesure de pression 12a, 12b, 12c (sur la figure 2, seuls trois éléments de mesure de pression sont représentées alors que quatre éléments de mesure de pression sont en réalité présents).

Le boitier 2 est de préférence en matériau métallique.

La structure intermédiaire 4 comprend une base 41, la base 41 comprenant une surface supérieure 41a sur laquelle s'étend la couche d'adhésif 3 et une surface inférieure 41b connectée au socle du boitier.

Afin de contrôler l'épaisseur e de la couche d'adhésif, la structure intermédiaire 4 est configurée pour maintenir à une distance d prédéterminée le substrat support 11 de la surface supérieure 41a de la structure intermédiaire 4.

En particulier, la configuration de la structure intermédiaire 4 permet de définir un espace libre 40 entre la surface inférieure 11b du substrat support 11 et la surface supérieure 41a de la base 41.

C'est notamment dans cet espace 40 que la couche d'adhésif 3 est déposée.

De cette manière, la structure intermédiaire 4 permet de disposer avec précision l'épaisseur e de la couche d'adhésif 3.

De manière préféré, la structure intermédiaire 4 comprend au moins deux cales 42, 43 en contact du substrat support 11. C'est donc grâce à au moins deux cales 42, 43 que la distance d prédéterminée entre le substrat support 11 et la surface supérieure 41a de la structure intermédiaire 4 est obtenue ce qui permet de contrôler l'épaisseur e de la couche d'adhésif 3 disposée entre la surface supérieure 41a de la base 41 et la surface inférieure 11b du substrat support 11.

En effet, les cales 42, 43 permet de définir l'espace libre 40 entre la surface supérieure 41a de la structure intermédiaire 4 et la surface inférieure 11b du substrat support 11, la couche d'adhésif étant disposée dans cet espace libre 40, entre les cales 42, 43. De plus, comme plusieurs cales sont disposées autour de la couche d'adhésif, un espace est également défini entre les cales 42, 43. Cet espace entre chaque paire de cales rend possible un étalement de la couche d'adhésif selon un plan horizontal, c'est-à-dire parallèlement à la surface supérieure 41a, sans risque d'accumulation d'adhésif entre la structure intermédiaire 4 et la membrane 10 déformable, plus précisément entre la surface supérieure de chaque cale et la surface inférieure de la membrane déformable.

Cette configuration à plusieurs cales offre un avantage certain par rapport à une configuration à une seule cale fermée sur elle-même. En effet, lorsqu'une couche d'adhésif entourée par une telle cale annulaire unique s'étale et/ou se dilate, cet adhésif n'a d'autre choix que de se glisser entre la surface supérieure annulaire de la cale fermée sur elle-même, ayant pour conséquence une variation indésirable de l'épaisseur de la couche d'adhésif et donc l'introduction d'erreurs dans les mesures acquises par le capteur.

La couche d'adhésif 3 est de préférence à base de silicone, ou de tout produit adhésif présentant des propriétés de souplesse lorsque soumis à des variations de température. A titre d'exemple, une épaisseur e d'une telle couche d'adhésif supérieure à 100 µm permet de minimiser l'erreur due aux cycles en température et permet d'obtenir des hystérésis en température négligeable (<0,05% pleine échelle pour des capteurs de plages de pressions de quelques mbars à quelques bars, et une température comprise entre -55°C et +150°C).

La présence de la couche d'adhésif 3 participe à la précision du capteur de pression sans autre fonction de liaison particulière comme c'est le cas dans l'art antérieur.

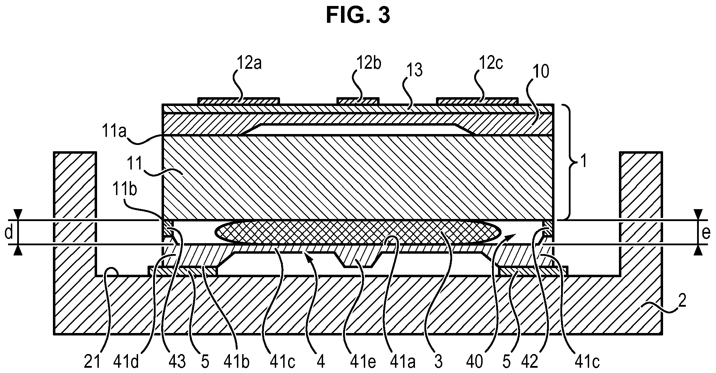

On a illustré sur la **figure 3** un capteur de pression selon un second mode de réalisation de l'invention.

Ce second mode de réalisation est similaire au premier mode de réalisation mais en diffère toutefois par la structure intermédiaire 4 qui est dans ce second mode de réalisation déformable.

La couche d'adhésif se retrouve alors confinée entre deux éléments déformables : la membrane 10 et la structure intermédiaire 4, les deux éléments déformables étant en contact par les cales.

La couche d'adhésif 3 peut se dilater et se contracter par effet de la température ; elle induit un stress qui peut être transmis à l'élément sensible 1 par l'intermédiaire des cales. Néanmoins le caractère déformable de la structure intermédiaire permet d'absorber tout ou partie de ce stress pour qu'il ne soit pas transmis à l'élément 1 ; ceci est important lors de l'utilisation du capteur, et en particulier lors de son fonctionnement à différentes températures.

Selon ce mode de réalisation, la structure intermédiaire 4 comprend, outre la surface supérieure 41a et la surface inférieure 41b, une partie fine 41c et une base 41d formant partie épaisse 41d de la structure intermédiaire 4.

La couche d'adhésif 3 repose, de préférence, sur la partie fine 41c. La partie épaisse 41d est d'épaisseur supérieure à la partie fine 41c. C'est cette différence d'épaisseur qui rend possible la déformation de la partie fine 41c et assure alors une fonction d'amortisseur.

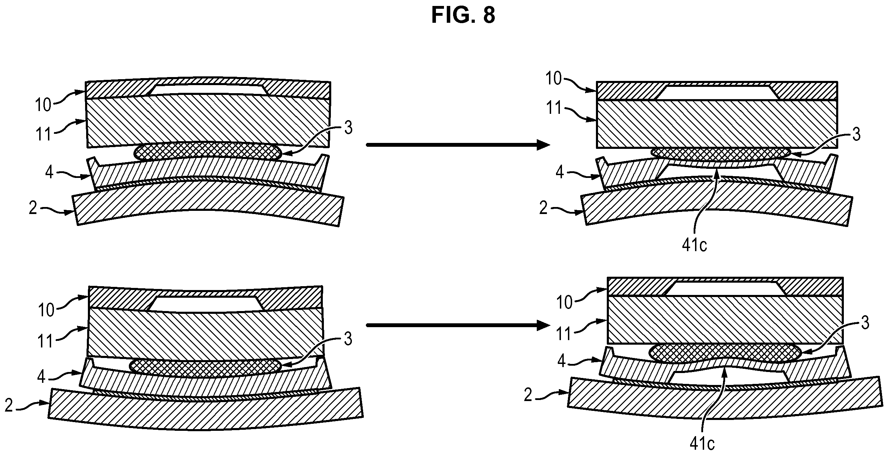

On a illustré de façon comparative en figure 8 un capteur selon le deuxième mode de réalisation (à droite), et un autre mode de réalisation sans partie fine 41c, tous deux soumis à des déformations de type flexion bombée vers la membrane (figures du haut) et de type flexion bombée vers le boîtier (figures du bas). Grâce à la partie 41c assurant une fonction d'amortisseur, la membrane 10 déformable du capteur selon le deuxième mode de réalisation se déforme dans des proportions inférieures à la membrane du mode de réalisation représenté à gauche, dépourvu de partie fine centrale. Ceci contribue encore à avoir des hystérésis en température réduit et améliore donc les performances du capteur de pression.

Afin de protéger la structure intermédiaire 4, qui est ici déformable, d'éventuelles suppressions appliquées sur la partie fine 41c, la structure intermédiaire 4 comprend une butée 41e en son centre. Ainsi, en cas de surpression, la butée 41e va venir en contact avec le socle 21 du boitier 2. La butée 41e peut être soit formée d'une seule pièce avec le reste de la structure intermédiaire soit rapportée et alors connectée à la partie fine 41c de la structure intermédiaire 4.

Bien entendu, dans ce second mode de réalisation, la structure intermédiaire 4 comprend au moins une cale 42, 43 en contact du substrat support 11.

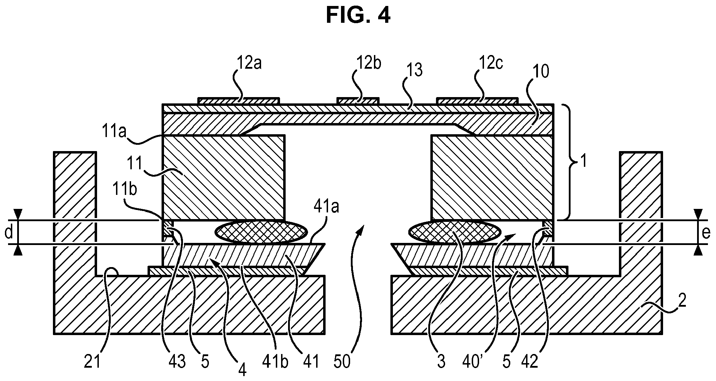

On a illustré sur la **figure 4** un capteur de pression selon un troisième mode de réalisation de l'invention.

Ce troisième mode de réalisation est similaire au premier mode de réalisation et comprend un plus un évidement central 50 de sorte que le capteur de pression est configuré pour mesurer une pression de manière différentielle (le capteur de la figure 2 précédemment décrit permet une mesure absolue de pression). Bien entendu, comme cela est illustré sur la figure 3, la membrane 10 déformable n'est pas traversée par l'évidement 50.

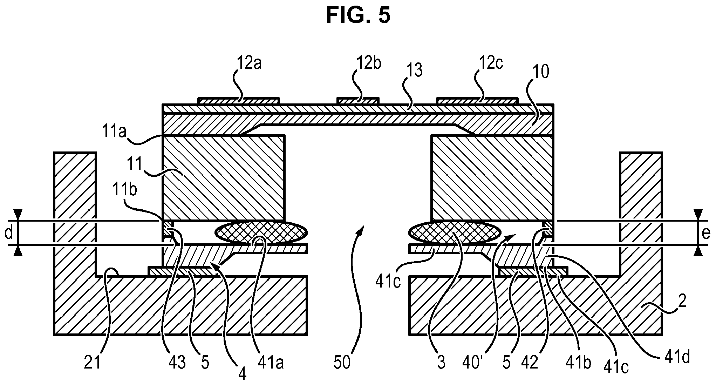

On a illustré sur la **figure 5** un capteur de pression selon un quatrième mode de réalisation de l'invention.

Ce quatrième mode de réalisation est similaire au second mode de réalisation et comprend un plus un évidement 50 central de sorte que le capteur de pression est configuré pour mesurer une pression de manière différentielle. Sur cette figure, la butée 4e n'est pas visible, s'agissant d'une vue en coupe. On comprend toutefois que l'évidement est formé au milieu de la butée.

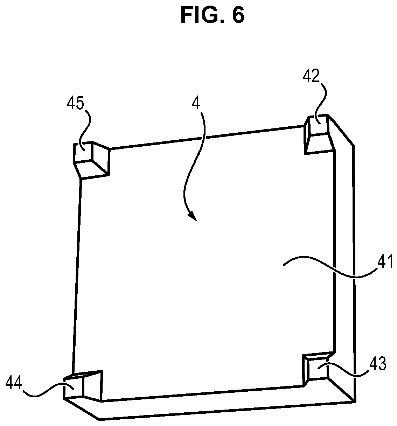

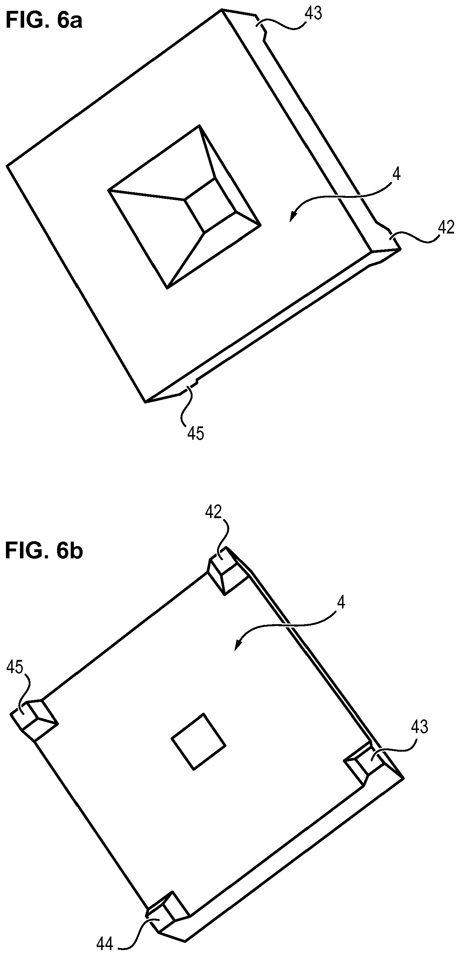

De manière avantageuse, comme cela est illustré sur les **figures 6****,** **6a et 6b** la structure intermédiaire 4 est rectangulaire ou encore de forme et de dimensions adaptées pour supporter le substrat support 11. De manière avantageuse, la structure intermédiaire 4 comprend plusieurs cales (quatre dans l'exemple) 42, 43, 44, 45 qui sont de manière plus précise quatre protubérances en saillie de la structure intermédiaire 4. Chaque cale est disposée à un coin respectif de la structure intermédiaire. Dans ce mode de réalisation, un passage est défini entre chaque paire de cales, la couche d'adhésif peut donc s'étaler et se dilater horizontalement selon quatre sens différents, via les quatre passages laissés libre entre chaque paire de cales adjacentes.

La structure intermédiaire 4 peut être en matériau à base de verre, de Silicium, quartz, pyrex™, saphir, alumine, SiC.

De manière complémentaire, la surface inférieure 41b de la structure intermédiaire 4 est connectée au socle du boitier 2 par l'intermédiaire d'une couche de liaison 5. Cette couche de liaison 5 est de préférence une couche en résine époxy.

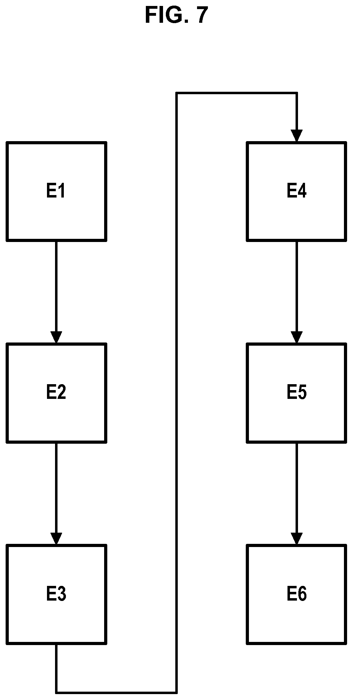

L'invention concerne également un procédé de fabrication d'un capteur de pression tel que décrit ci-dessus et en relation avec la **figure 7****.**

Un tel procédé de fabrication comprend les étapes suivantes :
- fournir E1 l'élément sensible 1 ;
- fournir E2 le boitier 2 ;
- fournir E3 la structure intermédiaire.

Une fois les éléments principaux du capteur fournis, le procédé comprend les étapes suivantes :
- déposer E4 la couche d'adhésif 3 sur la surface supérieure de la structure intermédiaire 4, ladite couche d'adhésif 3 étant d'épaisseur e contrôlée par la distance d prédéterminée à laquelle le substrat support 11 est maintenu de la surface supérieure de la base 41, 41d.
- connecter E5 au substrat support 11 la structure intermédiaire munie de ladite au moins une cale 42, 43, 44, 45 ;
- connecter E6 au socle 21 du boitier la structure intermédiaire 4.

L'ordre des étapes du procédé ci-dessus décrit n'est pas limitatif. En particulier, l'ordre des étapes de dépôt de la couche d'adhésif (étape E4), de connexion de la structure intermédiaire 4 (étape E5) et de connexion de la structure intermédiaire au socle (étape E6) peut être modifié sans que cela n'ait d'impact sur la structure finale obtenue.

Le contrôle de l'épaisseur de la couche d'adhésif est maîtrisé à l'étape E5, quand on vient poser le substrat support 11 sur la structure intermédiaire.

Comme déjà indiqué plus haut, la pluralité de cales 42, 43 permet une maîtrise de l'épaisseur de colle 3 et autorise un étalement de la colle. Cette maîtrise de l'épaisseur et de l'étalement de la colle permet notamment d'éviter que de la colle s'accumule entre les cales 42, 43 et le support 11 au cours de l'assemblage des différentes pièces du capteur.

## Revendications

1. Capteur de pression comprenant :
un élément sensible (1) comprenant un substrat support (11) ledit substrat support (11) comprenant une surface supérieure (11a) et une surface inférieure (11b), l'élément sensible (1) comprenant en outre une membrane (10) déformable connectée à la surface supérieure (11a) du substrat support (11) ;
un boitier (2) dans lequel l'élément sensible (1) est disposé, le boitier (2) comprenant un socle (21) ;
une structure intermédiaire (4) disposée entre le socle (21) du boitier (2) et le substrat support (11), ladite structure intermédiaire (4) comprenant une base (41, 41d), la base (41, 41d) comprenant une surface supérieure (41a) et une surface inférieure (41b) connectée au socle (21) du boitier (2) ;
une couche d'adhésif (3) s'étendant sur la surface supérieure (41a) de la base (41, 41d),
l'élément sensible (1) comprend en outre une couche isolante (13) disposée au-dessus de la membrane (10) déformable sur laquelle sont formés des éléments de mesure de pression (12a, 12b, 12c),
**caractérisé en ce que** ladite structure intermédiaire (4) comprend en outre une pluralité de cales (42, 43, 44, 45) agencées pour maintenir à une distance (d) prédéterminée le substrat support (11) de la surface supérieure (41a) de la base (41, 41d), les cales (42, 43, 44, 45) étant des protubérances en saillie de la structure intermédiaire (4), les cales (42, 43, 44, 45) définissant un espace libre (40) entre le substrat support (11) et la structure intermédiaire (4), **en ce que** les cales (42, 43, 44, 45) sont disposées autour de la couche d'adhésif (3), ladite couche d'adhésif (3) s'étendant dans ledit espace libre (40) et étant d'épaisseur (e) contrôlée par la distance (d) prédéterminée à laquelle le substrat support (11) est maintenu de la surface supérieure de la base (41, 41d).

2. Capteur de pression selon la revendication 1, dans lequel la structure intermédiaire (4) est en outre configurée pour définir un espace (40) entre la surface inférieure (11b) du substrat support (11) et la surface supérieure (41a) de la structure intermédiaire (4).

3. Capteur de pression selon l'une des revendications précédentes, dans lequel la structure intermédiaire (4) est rectangulaire et comprend quatre cales (42, 43, 44, 45), chaque cale (42, 43, 44, 45) étant disposée dans un coin de ladite structure intermédiaire (4).

4. Capteur de pression selon l'une des revendications précédentes, dans lequel la structure intermédiaire (4) est déformable.

5. Capteur de pression selon la revendication précédente, dans lequel la structure intermédiaire (4) comprend en outre une partie fine (41c) et une partie épaisse (41d), ladite partie fine (41c) supportant la couche d'adhésif (3).

6. Capteur de pression selon la revendication précédente, dans lequel la structure intermédiaire (4) comprend en outre une butée (41e) disposée au centre de la partie fine (41c) de ladite structure intermédiaire (4).

7. Capteur de pression selon l'une des revendications précédentes, dans lequel la structure intermédiaire (4) est un substrat en matériau choisi parmi le groupe suivant : silicium, verre, quartz, pyrex™, alumine, saphir, SiC.

8. Capteur de pression selon l'une des revendications précédentes, dans lequel la couche d'adhésif (3) est à base de silicone, matériau présentant des propriétés de souplesse lorsque soumis à des variations de température.

9. Capteur de pression selon l'une des revendications précédentes, dans lequel la surface inférieure (41b) de la structure intermédiaire (4) est connectée au socle du boitier (2) par l'intermédiaire d'une couche de liaison (5).

10. Capteur de pression selon la revendication précédente, dans lequel la couche de liaison (5) est une couche en résine époxy.

11. Capteur de pression selon l'une des revendications précédentes, dans lequel l'épaisseur de la couche d'adhésif (3) a une épaisseur (e) égale à la distance prédéterminée (d) à laquelle est maintenu l'élément sensible (1) de la surface supérieure (41a) de la structure intermédiaire (4).

12. Capteur de pression selon l'une des revendications précédentes, comprenant un évidement (50) central de sorte que ledit capteur de pression est configuré pour mesurer une pression de manière différentielle.

13. Procédé de fabrication d'un capteur de pression selon l'une des revendications précédentes, comprenant les étapes suivantes :
fournir (E1) un élément sensible (1) comprenant un substrat support (11) ledit substrat support (11) comprenant une surface supérieure (11a) et une surface inférieure (11b), l'élément sensible (1) comprenant en outre une membrane (10) déformable connectée à la surface supérieure (11a) du substrat support (11) ;
fournir (E2) un boitier (2) comprenant un socle (21) ;
fournir (E3) une structure intermédiaire (4) comprenant une base (41), la base (41, 41d) comprenant une surface supérieure (41a) ;
déposer (E4) une couche d'adhésif (3) sur la surface supérieure (41a) de la structure intermédiaire (4) et entre les cales (42, 43, 44, 45) ;
connecter (E5) la structure intermédiaire (4) au substrat support (11) ;
connecter (E6) au socle (21) du boitier la structure intermédiaire (4),
l'élément sensible (1) comprend en outre une couche isolante (13) disposée au-dessus de la membrane (10) déformable sur laquelle sont formés des éléments de mesure de pression (12a, 12b, 12c),
**caractérisé en ce que** ladite structure intermédiaire (4) comprend en outre une pluralité de cales (42, 43, 44, 45) agencées pour maintenir à une distance (d) prédéterminée le substrat support (11) de la surface supérieure (41a) de la base (41, 41d), les cales (42, 43, 44, 45) étant des protubérances en saillie de la structure intermédiaire (4), les cales (42, 43, 44, 45) définissant un espace libre (40) entre le substrat support (11) et la structure intermédiaire (4), **en ce que** les cales (42, 43, 44, 45) sont disposées autour de la couche d'adhésif (3), ladite couche d'adhésif (3) s'étendant dans ledit espace libre (40) et étant d'épaisseur (e) contrôlée par la distance (d) prédéterminée à laquelle le substrat support (11) est maintenu de la surface supérieure de la base (41, 41d).

## Patentansprüche

1. Drucksensor, der umfasst:
ein empfindliches Element (1), das ein Trägersubstrat (11) umfasst, wobei das Trägersubstrat (11) eine obere Fläche (11a) und eine untere Fläche (11b) umfasst, wobei das empfindliche Element (1) ferner eine verformbare Membran (10) umfasst, die mit der oberen Fläche (11a) des Trägersubstrats (11) verbunden ist;
ein Gehäuse (2), in dem das empfindliche Element (1) angeordnet ist, wobei das Gehäuse (2) einen Sockel (21) umfasst;
eine Zwischenstruktur (4), die zwischen dem Sockel (21) des Gehäuses (2) und dem Trägersubstrat (11) angeordnet ist, wobei die Zwischenstruktur (4) eine Basis (41, 41d) umfasst, wobei die Basis (41, 41d) eine obere Fläche (41a) und eine untere Fläche (41b) umfasst, die mit dem Sockel (21) des Gehäuses (2) verbunden ist;
eine Klebeschicht (3), die sich auf der oberen Fläche (41a) der Basis (41, 41d) erstreckt,
wobei das empfindliche Element (1) ferner eine über der verformbaren Membran (10) angeordnete Isolationsschicht (13) umfasst, auf der Druckmessungselemente (12a, 12b, 12c) gebildet sind,
**dadurch gekennzeichnet, dass** die Zwischenstruktur (4) ferner mehrere Keile (42, 43, 44, 45) umfasst, die eingerichtet sind, um das Trägersubstrat (11) in einem vorbestimmten Abstand (d) von der oberen Fläche (41a) der Basis (41, 41d) zu halten, wobei die Keile (42, 43, 44, 45) Höcker sind, die von der Zwischenstruktur (4) hervorstehen, wobei die Keile (42, 43, 44, 45) einen freien Raum (40) zwischen dem Trägersubstrat (11) und der Zwischenstruktur (4) definieren, dadurch, dass die Keile (42, 43, 44, 45) um die Klebeschicht (3) herum angeordnet sind, wobei die Klebeschicht (3) sich in den freien Raum (40) erstreckt und eine Dicke (e) aufweist, die durch den vorbestimmten Abstand (d) kontrolliert wird, in dem das Trägersubstrat (11) von der oberen Fläche der Basis (41, 41d) gehalten wird.

2. Drucksensor nach Anspruch 1, wobei die Zwischenstruktur (4) ferner ausgestaltet ist, um einen Raum (40) zwischen der unteren Fläche (11b) des Trägersubstrats (11) und der oberen Fläche (41a) der Zwischenstruktur (4) zu definieren.

3. Drucksensor nach einem der vorhergehenden Ansprüche, wobei die Zwischenstruktur (4) rechteckig ist und vier Keile (42, 43, 44, 45) umfasst, wobei jeder Keil (42, 43, 44, 45) in einer Ecke der Zwischenstruktur (4) angeordnet ist.

4. Drucksensor nach einem der vorhergehenden Ansprüche, wobei die Zwischenstruktur (4) verformbar ist.

5. Drucksensor nach dem vorhergehenden Anspruch, wobei die Zwischenstruktur (4) ferner einen feinen Teil (41c) und einen dicken Teil (41d) umfasst, wobei der feine Teil (41c) die Klebeschicht (3) trägt.

6. Drucksensor nach dem vorhergehenden Anspruch, wobei die Zwischenstruktur (4) ferner einen Anschlag (41e) umfasst, der in der Mitte des feinen Teils (41c) der Zwischenstruktur (4) angeordnet ist.

7. Drucksensor nach einem der vorhergehenden Ansprüche, wobei die Zwischenstruktur (4) ein Substrat aus Material ist, das aus der folgenden Gruppe ausgewählt ist: Silizium, Glas, Quarz, Pyrex™, Aluminiumoxid, Saphir, SiC.

8. Drucksensor nach einem der vorhergehenden Ansprüche, wobei die Klebeschicht (3) auf Silikonbasis ist, einem Material, das Elastizitätseigenschaften aufweist, wenn es Temperaturänderungen ausgesetzt wird.

9. Drucksensor nach einem der vorhergehenden Ansprüche, wobei die untere Fläche (41b) der Zwischenstruktur (4) über eine Verbindungsschicht (5) mit dem Sockel des Gehäuses (2) verbunden ist.

10. Drucksensor nach dem vorhergehenden Anspruch, wobei die Verbindungsschicht (5) eine Schicht aus Epoxidharz ist.

11. Drucksensor nach einem der vorhergehenden Ansprüche, wobei die Dicke der Klebeschicht (3) eine Dicke (e) aufweist, die gleich dem vorbestimmten Abstand (d) ist, in dem das empfindliche Element (1) von der oberen Fläche (41a) der Zwischenstruktur (4) gehalten wird.

12. Drucksensor nach einem der vorhergehenden Ansprüche, der eine mittlere Aussparung (50) umfasst, derart dass der Drucksensor ausgestaltet ist, um einen Druck auf differentielle Art zu messen.

13. Verfahren zur Herstellung eines Drucksensors nach einem der vorhergehenden Ansprüche, das die folgenden Schritte umfasst:
Liefern (E1) eines empfindlichen Elements (1), das ein Trägersubstrat (11) umfasst, wobei das Trägersubstrat (11) eine obere Fläche (11a) und eine untere Fläche (11b) umfasst, wobei das empfindliche Element (1) ferner eine verformbare Membran (10) umfasst, die mit der oberen Fläche (11a) des Trägersubstrats (11) verbunden ist;
Liefern (E2) eines Gehäuses (2), das einen Sockel (21) umfasst;
Liefern (E3) einer Zwischenstruktur (4), die eine Basis (41) umfasst, wobei die Basis (41, 41d) eine obere Fläche (41a) umfasst;
Aufbringen (E4) einer Klebeschicht (3) auf der oberen Fläche (41a) der Zwischenstruktur (4) und zwischen den Keilen (42, 43, 44, 45);
Verbinden (E5) der Zwischenstruktur (4) mit dem Trägersubstrat (11);
Verbinden (E6) der Zwischenstruktur (4) mit dem Sockel (21) des Gehäuses,
wobei das empfindliche Element (1) ferner eine über der verformbaren Membran (10) angeordnete Isolationsschicht (13) umfasst, auf der Druckmessungselemente (12a, 12b, 12c) gebildet sind,
**dadurch gekennzeichnet, dass** die Zwischenstruktur (4) ferner mehrere Keile (42, 43, 44, 45) umfasst, die eingerichtet sind, um das Trägersubstrat (11) in einem vorbestimmten Abstand (d) von der oberen Fläche (41a) der Basis (41, 41d) zu halten, wobei die Keile (42, 43, 44, 45) Höcker sind, die von der Zwischenstruktur (4) hervorstehen, wobei die Keile (42, 43, 44, 45) einen freien Raum (40) zwischen dem Trägersubstrat (11) und der Zwischenstruktur (4) definieren, dadurch, dass die Keile (42, 43, 44, 45) um die Klebeschicht (3) herum angeordnet sind, wobei die Klebeschicht (3) sich in den freien Raum (40) erstreckt und eine Dicke (e) aufweist, die durch den vorbestimmten Abstand (d) kontrolliert wird, in dem das Trägersubstrat (11) von der oberen Fläche der Basis (41, 41d) gehalten wird.

## Claims

1. A pressure sensor comprising:
a sensitive element (1) comprising a mounting substrate (11), said mounting substrate (11) comprising a top surface (11a) and a bottom surface (11b), the sensitive element (1) further comprising a deformable diaphragm (10) connected to the top surface (11a) of the mounting substrate (11);
a housing (2) in which the sensitive element (1) is placed, with the housing (2) comprising a base (21);
an intermediate structure (4) placed between the base (21) of the housing (2) and the mounting substrate (11), said intermediate structure (4) comprising a base (41, 41d), with the base (41, 41d) comprising a top surface (41a) and a bottom surface (41b) connected to the base (21) of the housing (2);
an adhesive layer (3) extending over the top surface (41a) of the base (41, 41d),
the sensitive element (1) further comprises an insulating layer (13) placed above the deformable diaphragm (10) on which are formed elements for measuring pressure (12a, 12b, 12c),
**characterized in that** said intermediate structure (4) further comprises a plurality of wedges (42, 43, 44, 45) arranged to keep the mounting substrate (11) at a predetermined distance (d) from the top surface (41a) of the base (41, 41d), the wedges (42, 43, 44, 45) being protuberances protruding from the intermediate structure (4), the wedges (42, 43, 44, 45) defining a free space (40) between the mounting substrate (11) and the intermediate structure (4), **in that** the wedges (42, 43, 44, 45) are placed around the adhesive layer (3), said adhesive layer (3) extending in said free space (40) and being of a thickness (e) controlled by the predetermined distance (d) at which the mounting substrate (11) is kept from the top surface of the base (41, 41d).

2. The pressure sensor according to claim 1, wherein the intermediate structure (4) is furthermore configured to define a space (40) between the bottom surface (11b) of the mounting substrate (11) and the top surface (41a) of the intermediate structure (4).

3. The pressure sensor according to one of the preceding claims, wherein the intermediate structure (4) is rectangular and comprises four wedges (42, 43, 44, 45), with each wedge (42, 43, 44, 45) placed in a corner of said intermediate structure (4).

4. The pressure sensor according to one of the preceding claims, wherein the intermediate structure (4) is deformable.

5. The pressure sensor according to the preceding claim, wherein the intermediate structure (4) further comprises a thin portion (41c) and a thick portion (41d), said thin portion (41c) supporting the adhesive layer (3) .

6. The pressure sensor according to the preceding claim, wherein the intermediate structure (4) further comprises an abutment (41e) placed at the centre of the thin portion (41c) of said intermediate structure (4).

7. The pressure sensor according to one of the preceding claims, wherein the intermediate structure (4) is a substrate made of material chosen from the following group: silicon, glass, quartz, Pyrex™, alumina, sapphire, SiC.

8. The pressure sensor according to one of the preceding claims, wherein the adhesive layer (3) has a base of silicone, a material that has flexible properties when subjected to variations in temperature.

9. The pressure sensor according to one of the preceding claims, wherein the bottom surface (41b) of the intermediate structure (4) is connected to the base of the housing (2) by the intermediary of a binder layer (5) .

10. The pressure sensor according to the preceding claim, wherein the binder layer (5) is a layer of epoxy resin.

11. The pressure sensor according to one of the preceding claims, wherein the thickness of the adhesive layer (3) has a thickness (e) equal to the predetermined distance (d) at which is kept the sensitive element (1) from the top surface (41a) of the intermediate structure (4) .

12. The pressure sensor according to one of the preceding claims, comprising a central recess (50) in such a way that said pressure sensor is configured to measure a pressure differentially.

13. A method for manufacturing a pressure sensor according to one of the preceding claims, comprising the following steps:
providing (E1) a sensitive element (1) comprising a mounting substrate (11), said mounting substrate (11) comprising a top surface (11a) and a bottom surface (11b), the sensitive element (1) further comprising a deformable diaphragm (10)connected to the top surface (11a) of the mounting substrate (11);
providing (E2) a housing (2) comprising a base (21);
providing (E3) an intermediate structure (4) comprising a base (41), with the base (41, 41d) comprising a top surface (41a);
depositing (E4) an adhesive layer (3) on the top surface (41a) of the intermediate structure (4) and between the wedges (42, 43, 44, 45);
connecting (E5) the intermediate structure (4) to the mounting substrate (11);
connecting (E6) the intermediate structure (4) to the base (21) of the housing,
the sensitive element (1) further comprises an insulating layer (13) placed above the deformable diaphragm (10) on which are formed elements for measuring pressure (12a, 12b, 12c),
**characterized in that** said intermediate structure (4) further comprises a plurality of wedges (42, 43, 44, 45) arranged to keep the mounting substrate (11) at a predetermined distance (d) from the top surface (41a) of the base (41, 41d), the wedges (42, 43, 44, 45) being protuberances protruding from the intermediate structure (4), the wedges (42, 43, 44, 45) defining a free space (40) between the mounting substrate (11) and the intermediate structure (4), **in that** the wedges (42, 43, 44, 45) are placed around the adhesive layer (3), said adhesive layer (3) extending in said free space (40) and being of a thickness (e) controlled by the predetermined distance (d) at which the mounting substrate (11) is kept from the top surface of the base (41, 41d).
